(19) Europäisches Patentamt
European Patent Office
Office européen des brevets

(11) **EP 4 491 688 A1**

(12) **EUROPEAN PATENT APPLICATION**
published in accordance with Art. 153(4) EPC

(43) Date of publication:
**15.01.2025 Bulletin 2025/03**

(21) Application number: **23767130.0**

(22) Date of filing: **07.03.2023**

(51) International Patent Classification (IPC):
***C09D 183/06** (2006.01)* ***C09D 5/20** (2006.01)*
***C09J 7/40** (2018.01)* ***C08G 77/20** (2006.01)*
***C08G 77/12** (2006.01)* ***C08L 83/06** (2006.01)*
***C08K 5/5419** (2006.01)*

(52) Cooperative Patent Classification (CPC):
**C07F 7/18; C08G 77/12; C08G 77/20; C08K 5/5419; C08K 5/544; C08L 83/06; C09D 5/20; C09D 183/06; C09J 7/38; C09J 7/40**

(86) International application number:
**PCT/KR2023/003108**

(87) International publication number:
**WO 2023/172029 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.03.2022 KR 20220028888**

(71) Applicant: **LG Chem, Ltd.**
**Yeongdeungpo-gu**
**Seoul 07336 (KR)**

(72) Inventors:
- **PARK, Jun Hyoung**
  **Daejeon 34122 (KR)**
- **KIM, Hyun Cheol**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **COMPOUND**

(57) The present application can provide a compound, a release composition, a release layer, a release film, and a pressure-sensitive adhesive film. The present application can provide a compound that can form a release layer which enables to exhibit an appropriate level of release peel force, and has an excellent bonding force with a base film and excellent solvent resistance. In addition, the present application can provide a compound that when the release layer has been formed, the release layer exhibits a stable residual adhesion rate even in the case of being repeatedly applied to a pressure-sensitive adhesive layer, and the like. The present application can also provide a release composition and a release layer comprising the compound, and a release film and a pressure-sensitive adhesive film comprising the release layer.

[Figure 1]

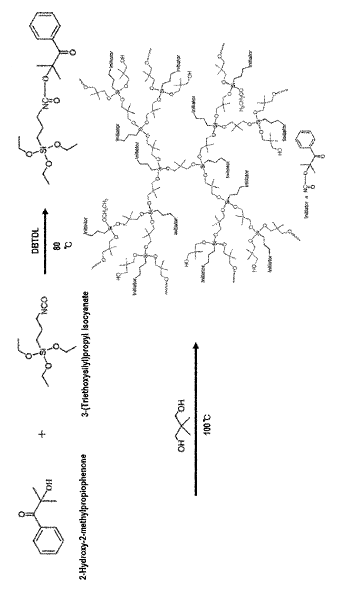


EP 4 491 688 A1

## Description

## Technical Field

### Cross-citation with related applications

This application claims priority based on Republic of Korea Patent Application No. 10-2022-0028888 filed on March 7, 2022, the disclosure of which is incorporated herein by reference in its entirety.

### Technical field

The present application relates to a compound, a release composition, a release layer, a release film, and a pressure-sensitive adhesive film.

## Background Art

Release films are used for a use protecting pressure-sensitive adhesive surfaces or adhesive surfaces, a carrier use, and a use of coating base materials, and the like. For example, so-called light or medium-peeling release films can be applied to protect optical adhesive materials (OCA, optically clear adhesive). In addition, the release film can serve as a carrier for tapes, and the like, or can be used as a coating base material for a multi-layer ceramic capacitor (MLCC), and the like.

The release layer of the release film is generally formed of a silicone-based compound, where a composition comprising a silicone-based compound, such as a silicone resin, may be coated on a base film to form a release layer containing the silicone resin on the base film.

The release layer has low surface energy and flexibility. For example, Patent Document 1 discloses a release film having a release layer formed of a silicone-based compound.

In a release film, a bonding force between a base film and a release layer must be secured. If the bonding force between the base film and the release layer is lowered, it cannot perform a function as a release film.

However, a release layer formed using a silicone-based compound generally does not have a high bonding force with the base film, which shows a tendency that the bonding force further decreases over time.

In addition, during a process of forming a release layer or a process of using a release film, the release layer often contacts a solvent, where if the solvent resistance of the release layer decreases, the bonding force may decrease or the release layer may be easily damaged, so that it is also an important object for the release layer to secure solvent resistance.
(Patent Document 0001) Korean Laid-Open Patent Publication No. 10-2021-0115256

## Disclosure

## Technical Problem

The present application provides a compound, a release composition, a release layer, a release film, and a pressure-sensitive adhesive film.

The present application is intended to provide a compound that can form a release layer which enables to exhibit an appropriate level of release peel force, and has an excellent bonding force with a base film and excellent solvent resistance. In addition, the present application is intended to provide a compound that when the release layer has been formed, the release layer exhibits a stable residual adhesion rate even in the case of being repeatedly applied to a pressure-sensitive adhesive layer, and the like.

The present application is also intended to provide a release composition and a release layer comprising the compound, and a release film and a pressure-sensitive adhesive film comprising the release layer.

## Technical Solution

Among the physical properties mentioned in this specification, when the measurement temperature affects the relevant physical property, the physical property is a physical property measured at room temperature, unless otherwise specified. In this specification, the term room temperature is a natural temperature without artificially heating or cooling, which may mean, for example, any one temperature in a range of about 10°C to 30°C, or a temperature of about 27°C or less while being about 15°C or more, 18°C or more, 20°C or more, or about 23°C or more, or a temperature of about 23°C, about 25°C, or about 27°C or so.

Unless otherwise specified, the unit of temperature mentioned in this specification is °C.

Among the physical properties mentioned in this specification, when the measurement pressure affects the relevant physical property, the physical property is a physical property measured at normal pressure, unless otherwise specified. In this specification, the term normal pressure is a natural pressure without artificially pressurizing or depressurizing, which may mean a pressure at the level of normal atmospheric pressure, for example, a pressure of about 740 mmHg to 780 mmHg or so.

The term relative humidity as used in the present application is expressed as a percentage (%) of the ratio of the amount of water vapor contained in the current air of a unit volume to the saturated vapor pressure that the air of the unit volume can contain at the maximum, which can be expressed in RH%. Among the physical properties mentioned in this application, when the relative humidity affects the physical property, the relevant physical property is a physical property measured in a humid environment (about 30 RH% to 70 RH%), unless otherwise specified.

The term 'a to b' as used in the present application means 'within the range between a and b while including a and b'. For example, the fact that includes a to b parts by weight has the same meaning as included in the range of a to b parts by weight.

The term substitution as used in the present application means that a hydrogen atom bonded to a carbon atom of a compound is changed to another substituent, where the position to be substituted is not particularly limited if it is a position in which the hydrogen atom is substituted, that is, a position in which the substituent is substitutable, and when two or more substituents are substituted, the substituents may be the same as or different from each other.

Unless otherwise specified, an alkyl group or alkoxy group mentioned in this specification may be a linear or branched alkyl group or alkoxy group with 1 to 20 carbon atoms, or 1 to 16 carbon atoms, or 1 to 12 carbon atoms, or 1 to 8 carbon atoms, or 1 to 6 carbon atoms, or may be a cyclic alkyl group or alkoxy group with 3 to 20 carbon atoms, or 3 to 16 carbon atoms, or 3 to 12 carbon atoms, or 3 to 8 carbon atoms, or 3 to 6 carbon atoms. Here, the cyclic alkyl group or alkoxy group also includes an alkyl group or alkoxy group having only a ring structure, and an alkyl group or alkoxy group containing a ring structure. For example, both cyclohexyl group and methyl cyclohexyl group correspond to cyclic alkyl groups.

In the present application, an alkylene group mean a divalent residue formed by removing two hydrogen atoms from an alkane. In the case of the alkylene group, it is a structure in which the two carbon atoms are removed from different carbon atoms of the alkane, respectively, one by one, and the alkylidene group is a structure in which the two carbon atoms are removed from one carbon atom of the alkane. Unless otherwise specified, the alkylidene group mentioned in this specification may be a linear or branched alkylidene group with 1 to 20 carbon atoms, or 1 to 16 carbon atoms, or 1 to 12 carbon atoms, or 1 to 8 carbon atoms, or 1 to 6 carbon atoms, or may be a cyclic alkylidene group with 3 to 20 carbon atoms, or 3 to 16 carbon atoms, or 3 to 12 carbon atoms, or 3 to 8 carbon atoms, or 3 to 6 carbon atoms. Here, the cyclic alkylidene group also includes an alkylidene group having only a ring structure, and an alkylidene group containing a ring structure. Unless otherwise specified, the alkylene group mentioned in this specification may be a linear or branched acyclic alkylene group with 2 to 20 carbon atoms, or 2 to 16 carbon atoms, or 2 to 12 carbon atoms, or 2 to 8 carbon atoms, or 2 to 6 carbon atoms, or may be a cyclic alkylene group with 3 to 20 carbon atoms, or 3 to 16 carbon atoms, or 3 to 12 carbon atoms, or 3 to 8 carbon atoms, or 3 to 6 carbon atoms. Here, the cyclic alkylene group includes an alkylene group having only a ring structure, and an alkylene group containing a ring structure.

Unless otherwise specified, an alkenyl group or alkenylene group mentioned in this specification may be a linear or branched acyclic alkenyl group or alkenylene group with 2 to 20 carbon atoms, or 2 to 16 carbon atoms, or 2 to 12 carbon atoms, or 2 to 8 carbon atoms, or 2 to 6 carbon atoms, or may be a cyclic alkenyl group or alkenylene group with 3 to 20 carbon atoms, or 3 to 16 carbon atoms, or 3 to 12 carbon atoms, or 3 to 8 carbon atoms, or 3 to 6 carbon atoms. Here, the cyclic alkenyl group or alkenylene group also includes an alkenyl group or alkenylene group having only a ring structure, and an alkenyl group or alkenylene group containing a ring structure.

Unless otherwise specified, the alkynyl group or alkynylene group mentioned in this specification may be a linear or branched acyclic alkynyl group or alkynylene group with 2 to 20 carbon atoms, or 2 to 16 carbon atoms, or 2 to 12 carbon atoms, or 2 to 8 carbon atoms, or 2 to 6 carbon atoms, or may be a cyclic alkynyl group or alkynylene group with 3 to 20 carbon atoms, or 3 to 16 carbon atoms, or 3 to 12 carbon atoms, or 3 to 8 carbon atoms, or 3 to 6 carbon atoms. Here, if the alkynyl group or alkynylene group with a ring structure is included, it corresponds to a cyclic alkynyl group or alkynylene group.

The alkyl group, alkoxy group, alkylidene group, alkylene group, alkenyl group, alkenylene group, alkynyl group, and alkynylene group may also be substituted by any one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

In this specification, the term aryl group means a substituent formed by removing one hydrogen from an aromatic hydrocarbon ring compound, where the aromatic hydrocarbon ring compound may be a monocyclic or polycyclic ring compound. The number of carbon atoms of the aryl group is not particularly limited, but unless otherwise specified, the aryl group may be an aryl group with 6 to 20 carbon atoms, 6 to 18 carbon atoms, or 2 to 15 carbon atoms.

The arylene group mentioned in this specification means a divalent functional group in which one hydrogen is additionally removed from the aryl group. The description of the aryl group as described above can be applied in the same manner, except that these groups are each a divalent group. The aryl group may be exemplified by a phenyl group, a phenylethyl group, a phenylpropyl group, a benzyl group, a tolyl group, a xylyl group, or a naphthyl group, and the like, but is not limited thereto.

In the present application, the term heteroaryl group means a functional group with a structure in which one or more of the carbon atoms constituting the aromatic ring of the aryl group are replaced with heteroatoms other than carbon atoms. Here, the heteroatom may be exemplified by nitrogen (N), oxygen (O), sulfur (S), selenium (Se), or tellurium (Te). The atoms constituting the ring structure of the heteroaryl group may be referred to as ring atoms. In addition, the heteroaryl group may include a monocyclic or polycyclic ring. The number of carbon atoms or the number of ring atoms in the heteroaryl group is not particularly limited, but may be in a range of 2 to 30, or 2 to 26, or 2 to 22, or 2 to 20, or 2 to 18, or 2 to 15. In another example, the number of ring atoms in the heteroaryl group is not particularly limited, but for example, the heteroaryl group may be a heteroaryl group with 5 to 30, 5 to 25, 5 to 20, 5 to 15, 5 to 10, or 5 to 8 ring atoms. The heteroaryl group may be exemplified by, for example, a thiophene group, a furan group, a pyrrole group, an imidazolyl group, a thiazolyl group, an oxazolyl group, an oxadiazolyl group, a triazolyl group, a pyridyl group, a bipyridyl group, a pyrimidyl group, a triazinyl group, an acridyl group, a pyridazinyl group, a pyrazinyl group, a quinolinyl group, a quinazolinyl group, a quinoxalinyl group, a phthalazinyl group, a pyridopyrimidinyl group, a pyridopyrazinyl group, a pyrazinopyrazinyl group, an isoquinolinyl group, an indole group, a carbazolyl group, a benzoxazolyl group, a benzimidazolyl group, a benzothiazolyl group, a benzocarbazolyl group, a dibenzocarbazolyl group, a benzothiophene group, a dibenzothiophene group, a benzofuran group, a dibenzofuran group, a benzosilol group, a dibenzosilol group, a phenanthrolinyl group, an isoxazolyl group, a thiadiazolyl group, a phenothiazinyl group, a phenoxazine group and a condensed structure of the foregoing, and the like, but is not limited thereto.

In addition, the term heteroarylene group as used in the present application means a divalent group in which one hydrogen atom is further removed from the heteroaryl group. The description of the heteroaryl group as described above can be applied, except that these are divalent groups.

The aryl group or heteroaryl group may also be optionally substituted with one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

The present application provides a compound with a specific structure. In one example, the compound may be a compound containing a silicon atom to which a radical generating functional group is bonded.

For example, the compound may be a compound containing a chain formed of silicon atoms linked by a linker and a radical generating functional group linked to the silicon atom present in the chain.

Such a compound can be expressed, for example, by an average unit of Formula 1 below.

[Formula 1] $$R^1{}_mR^2{}_nSiX_{(4-m-n)/2}$$

In Formula 1, $R^1$ may be a radical generating functional group, $R^2$ may be hydrogen, an isocyanatoalkyl group, a hydroxyalkyloxy group, an alkoxy group, or a monovalent hydrocarbon group, and X may be a linker linking silicon atoms of the compound to each other.

In Formula 1, m may be a number in a range of 1 to 3, n may be a number in a range of 0 to 2, and the sum (m+n) of m and n may be a number in a range of 1 to 3.

In this specification, the term average unit means a formula expressed by converting the number of moles of the functional group (functional group directly linked to the silicon atom) and the linker (linker linking the silicon atom to the silicon atom) contained in the compound based on the matter that the number of moles of silicon atoms contained in the compound is regarded as 1 mole. Such an average unit may be for a monomolecular compound, or may also be for a mixture of bimolecular or higher compounds. When the average unit is for the mixture of bimolecular or higher compounds, the ratio of other functional groups or linkers is calculated by assuming that the number of moles of all silicon atoms included in the mixture is 1.

In Formula 1, $R^1$ and $R^2$ on the left of the silicon atom (Si) represent functional groups directly linked to the silicon atom, and X on the right represents a linker linking the silicon atom to the silicon atom.

In Formula 1, m is the number of moles of the functional group $R^1$ converted by assuming that the number of moles of silicon atoms contained in the compound is 1 mole, and n is the number of moles of the functional group $R^2$ converted by assuming that the number of moles of silicon atoms contained in the compound is 1 mole.

Also, in Formula 1, (4-m-n) is the number of moles of the linker X converted by assuming that the number of moles of silicon atoms contained in the compound is 1 mole. In the case of linker X, 2 silicon atoms are bonded thereto, so that the number of moles is divided by 2 to be expressed.

Such an expressing method is like the method of expressing the average unit of a so-called polyorganosiloxane.

In Formula 1, the linker X may be an oxygen atom or a divalent linker of Formula 2 below.

[Formula 2]

$$-O-L_1-O-$$

In Formula 2, $L_1$ may be an alkylene group or an alkylidene group.

Specific types of the alkylene group or alkylidene group of Formula 2 are as exemplified at the opening of this specification.

In Formula 2, the oxygen atoms on both sides of $L_1$ are directly linked to the silicon atoms of the compound, respectively.

As described below, the compound is produced by reacting an alkoxysilane into which a desired functional group ($R^1$, etc.) has been introduced and a diol compound forming the linker of Formula 2 above. In this case, the alkoxy group of the alkoxysilane reacts with the hydroxy groups of the diol compound, whereby a structure, in which the silicon atoms of the alkoxysilane are linked by the linker of Formula 2 above, is derived. In such a reaction process, a siloxane bond in which a silicon atom is bonded to a silicon atom via an oxygen atom may also be created through a condensation reaction between the alkoxy groups of the alkoxysilane. Therefore, in Formula 1, X may be an oxygen atom or a divalent linker in Formula 2 above.

In one example, a certain level or more of all linkers X contained in the compound having the average unit of Formula 1 may be the linker of Formula 2. For example, the lower limit of the ratio of the number of moles of the linker of Formula 2 above based on the total number of moles of the linkers X contained in the compound, may be 70 mol%, 75 mol%, 80 mol%, 85 mol%, 90 mol%, 95 mol%, or 97 mol% or so, and the upper limit thereof may be 100 mol% or so. The ratio may be more than or equal to, or more than any one of the above-described lower limits, or may be less than or equal to, or less than any one of the above-described upper limits while being more than or equal to, or more than any one of the above-described lower limits.

In Formula 1, $R^1$ is a radical generating functional group. The term radical generating functional group means a functional group containing a moiety capable of generating radicals by energy application such as light irradiation or heat application, and the type of such a functional group is not limited, if it can generate radicals.

In Formula 1, $R^2$ may be hydrogen, an isocyanatoalkyl group, a hydroxyalkyloxy group, an alkoxy group, or a monovalent hydrocarbon group.

Specific types of the alkyl group and specific types of the alkoxy group contained in the isocyanatoalkyl group and the hydroxyalkyloxy group of $R^2$ in Formula 1 are as described at the opening of this specification.

In addition, here, the term monovalent hydrocarbon group is a monovalent residue derived from a substituted or unsubstituted hydrocarbon (organic compound consisting of carbon and hydrogen), and an example thereof includes an alkyl group, an alkenyl group, an alkynyl group, or an aryl group. Specific examples of the alkyl group, alkenyl group, alkynyl group, or aryl group are as described at the opening of this specification.

As described below, the compound can be produced by reacting an alkoxysilane, into which a radical generating functional group ($R^1$, etc.) is introduced, in the presence of a diol compound, and the introduction of the radical generating functional group can be performed by a urethane reaction using an alkoxysilane compound having an isocyanate alkyl group. In this case, theoretically, all the isocyanatoalkyl groups contained in the alkoxysilane compound are converted to the radical generating functional groups, and all the alkoxy groups of the alkoxysilane compound are converted to linkers (oxygen atoms or linkers of Formula 2). However, isocyanatoalkyl groups that did not participate in the urethane reaction may remain in the final compound, and alkoxy groups that failed to form the linkers and/or alkoxy groups that reacted with the diol compound but did not form the linkers (these alkoxy groups exist in the form of hydroxyalkyloxy groups) may remain. Also, in the alkoxysilane compound, hydrogen or monovalent hydrocarbon groups that do not participate in the urethane reaction and linker formation reaction may exist.

Therefore, $R^2$ in Formula 1 may be hydrogen, an isocyanatoalkyl group, a hydroxyalkyloxy group, an alkoxy group, or a monovalent hydrocarbon group.

In Formula 1, m may be a number in a range of 1 to 3, a number in a range of 1 to 2.5, a number in a range of 1 to 2, a number in a range of 1 to 1.5, or may be about 1 or so.

In Formula 1, n may be a number in a range of 0 to 2, a number in a range of 0 to 1.5, or a number in a range of 0 to 1.

The sum (m+n) of m and n in Formula 1 may be a number in a range of 1 to 3, a number in a range of 1.5 to 3, a number in a range of 2 to 3, or a number in a range of 2.5 to 3.

In one example, the radical generating functional group $R^1$ of Formula 1 may be a functional group represented by Formula 3 below.

[Formula 3]

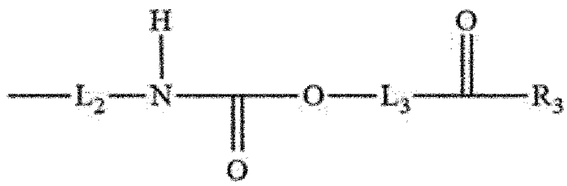

In Formula 3, $L_2$ and $L_3$ may each independently be an alkylene group or an alkylidene group, and $R_3$ may be an aryl group or heteroaryl group.

Specific examples of the alkylene group and alkylidene group of $L_2$ and $L_3$ in Formula 3 are as described at the opening of this specification, and specific examples of the aryl group or heteroaryl group of $R_3$ are also as described at the opening of this specification.

$L_2$ in Formula 3 is directly linked to the silicon atom of the compound.

In one example, $L_2$ and $L_3$ in Formula 3 may each independently be the alkylene group, and $R_3$ may be the aryl group.

The functional group of Formula 3 has a structure in which oxygen atoms exist on both sides of $L_3$. Due to the high electronegativity of the oxygen atom, the carbon-carbon bond or carbon-oxygen bond in the structure of $-O-L_3-C(=O)-$ has a relatively weak bond strength, and therefore, while the bonds are broken by external energy application such as light irradiation or heat application, radicals can be generated.

The compound may have a branched structure, a cage structure, or a partial cage structure. The branched structure, cage structure or partial cage structure is substantially the same as the branched structure, cage structure or partial cage structure mentioned for the so-called polyorganosiloxane. There is a difference in that in the case of the polyorganosiloxane, the linker linking the silicon atom to the silicon atom in the above structure is an oxygen atom, but in the case of the above compound, the linker (X in Formula 1) is an oxygen atom or the linker in Formula 2.

The compound may be a high molecular compound. Therefore, the compound may have a molecular weight above a certain level. For example, the lower limit of the weight average molecular weight of the above compound may be 5,000 g/mol, 6,000 g/mol, 7,000 g/mol, 8,000 g/mol, 9,000 g/mol, 10,000 g/mol, 15,000 g/mol, 20,000 g/mol, 25,000 g/mol, 30,000 g/mol, 35,000 g/mol, 40,000 g/mol, 45,000 g/mol, or 50,000 g/mol or so, and the upper limit thereof may be 200,000 g/mol, 150,000 g/mol, 100,000 g/mol, 95,000 g/mol, 90,000 g/mol, 85,000 g/mol, 80,000 g/mol, 75,000 g/mol, 70,000 g/mol, 65,000 g/mol, 60,000 g/mol, 55,000 g/mol, or 50,000 g/mol or so. The weight average molecular weight of the compound may be less than or equal to, or less than any one of the above-described upper limits, or may be more than or equal to, or more than any one of the above-described lower limits, or may have a range of more than or equal to, or more than any one of the above-described lower limits while being less than or equal to, or less than any one of the above-described upper limits.

The compound may have a certain level of polydispersity index. The polydispersity index is a value (Mw/Mn) obtained by dividing the weight average molecular weight (Mw) of the compound by the number average molecular weight (Mn). The lower limit of the polydispersity index may be 1, 1.1, 1.2, 1.3, 1.4, 1.5, 1.6, 1.7, 1.8, 1.9, 2, or 2.1 or so, and the upper limit thereof may be 10, 9, 8, 7, 6, 5, 4.5, 4, 3.5, 3, or 2.5 or so. The polydispersity index of the compound may be less than or equal to, or less than any one of the above-described upper limits, or may be more than or equal to, or more than any one of the above-described lower limits, or may have a range of more than or equal to, or more than any one of the above-described lower limits while being less than or equal to, or less than any one of the above-described upper limits.

As such a compound is included in the release layer to form a unique cross-linked structure, it is possible to provide the desired release layer in the present application.

Such a compound can be synthesized using known methods, for example, known methods for producing polyorganosiloxane.

Among the methods for synthesizing polyorganosiloxane, a method of forming the polyorganosiloxane by using an alkoxysilane as a monomer and performing a condensation reaction of the alkoxysilane is known. In the present application, the condensation reaction of the polyorganosiloxane is performed in the presence of a diol compound. In this case, the linker of Formula 2 may be formed through a reaction between the hydroxy group of the diol compound and the alkoxy group of the alkoxysilane. In addition, a compound having the average unit of Formula 1 above can be synthesized by applying a compound in which $R^1$ and/or $R^2$ above is present as the alkoxysilane applied to the condensation reaction.

In the above process, the method of introducing the functional group of $R^1$ and/or $R^2$ above, especially the functional group of $R^1$ above, into the alkoxysilane is not particularly limited. For example, among commercially available alkoxysilanes, alkoxysilanes having the functional group of $R^1$ and/or $R^2$ above together with an alkoxy group can be used. Alternatively, the functional group may be introduced into the alkoxysilane through a separate reaction. For example, when

an alkoxysilane having an isocyanate group is applied as the alkoxysilane and it is reacted with a radical generating compound having a hydroxy group, the radical generating moiety of the radical generating compound can be introduced into the alkoxysilane through a urethane reaction or the like.

One example of such methods for synthesizing the above compound is described in Preparation Example 1 of this specification.

In Preparation Example 1, an isocyanate compound having an alkoxy silyl group (alkoxysilane having an isocyanate group) is first reacted with a radical generating compound having a hydroxy group to obtain an alkoxysilane (intermediate product) into which the radical generating moiety of the radical generating compound is introduced. Here, a commercially available compound can be used as the isocyanate compound having an alkoxy silyl group, and a commercially available compound (for example, a compound having a hydroxy group among compounds known as radical initiators) can be applied as the radical generating compound.

The reaction to obtain the intermediate product can be performed at a predetermined temperature and for a predetermined time by adding a catalyst, if necessary. Thereafter, the intermediate product can be further reacted in the presence of polyol (diol compound) to obtain the target compound. The additional reaction can also be performed at a predetermined temperature and for a predetermined time. The temperature and time may be adjusted in consideration of the yield of the reacting compound and the target compound, and the like. For example, the predetermined temperature may be in a range of 60°C to 150°C, and the predetermined time may be in a range of 1 hour to 7 hours, without being limited thereto.

As described above, as the radical generating compound applied to the above reaction, for example, a compound having a hydroxy group among compounds known to be capable of generating radicals may be used. One example of such a compound is a radical initiator having a hydroxy group and a ketone group. As such a radical initiator, one or more selected from the group consisting of 2-hydroxy-2-methyl-1-phenyl-1-propanone, 1-hydroxycyclohexylphenylketone, 4-(2-hydroxyethoxy)phenyl-2-(hydroxy-2-propyl)ketone and oligo[2-hydroxy-2-methyl-1[4-(1-methylvinyl) phenyl]propanone] may be used, but is not particularly limited thereto. Also, the radical generating compound may contain one or more functional groups selected from the group consisting of an aryl group and a heteroaryl group. When the radical generating compound contains an aryl group and/or a heteroaryl group, polymerization is initiated without decomposition, whereby it is possible to form a compound capable of post-curing and reducing unreacted products.

The type of the isocyanate compound having the alkoxy silyl group is not particularly limited if it is a compound containing an alkoxy silyl group and an isocyanate group at the terminal. For example, an alkylene group with 1 to 20 carbon atoms may be bonded between the silicon atom (Si) of the alkoxy silyl group and the nitrogen atom (N) of the isocyanate. In another example, the upper limit of the number of carbon atoms may be 19, 18, 17, 16, 15, 14, 13, 12, 11, 10, 9, 8, 7, 6, 5, 4, or 3 or so. The number of carbon atoms may be less than or equal to, or less than any one of the above-described upper limits, but is not limited thereto.

In addition, the isocyanate compound having the alkoxy silyl group may have at least one or more alkoxysilyl groups, and the alkoxy group bonded to the silicon atom (Si) in the alkoxysilyl group may be an alkoxy group with 1 to 20 carbon atoms. The upper limit of the number of carbon atoms may be 19, 18, 17, 16, 15, 14, 13, 12, 11, 10, 9, 8, 7, 6, 5, 4, or 3 or so. The number of carbon atoms may be less than or equal to, or less than any one of the above-described upper limits, and for example, as the isocyanate compound having the alkoxysilyl group, 3-(triethoxysilyl)propyl isocyanate, 3-(trimethoxysilyl)propyl Isocyanate, 3-(triethoxysilyl)ethyl isocyanate, 3-(triethoxysilyl)butyl isocyanate, or 3-(triethoxysilyl) methyl isocyanate, and the like may be used.

The intermediate product for synthesizing the compound may be obtained by reacting a composition comprising an isocyanate compound having an alkoxy silyl group and a radical generating compound as above. At this time, the ratio of each reactive compound in the composition may be adjusted considering the structure of the desired compound.

For example, the lower limit of the content of the radical generating compound in the composition may be 10 wt%, 12.5 wt%, 15 wt%, 17.5 wt%, 20 wt%, 22.5 wt%, 25 wt%, 27.5 wt%, 30 wt%, 32.5 wt%, or 35 wt% or so, relative to the total weight of the composition, and the upper limit thereof may be 50 wt%, 48 wt%, 46 wt%, 44 wt%, 42 wt%, or 40 wt% or so. The ratio may be less than or equal to, or less than any one of the above-described upper limits, or may be more than or equal to, or more than any one of the above-described lower limits, or may have a range of more than or equal to, or more than any one of the above-described lower limits while being less than or equal to, or less than any one of the above-described upper limits. When the composition forming the intermediate product comprises the above compound in the above content, it is possible to provide a compound capable of forming a release layer having excellent film forming properties, having an appropriate level of release peel force and an excellent residual adhesion rate, and having a minimized change of a release peel force caused by external factors such as heat and ultraviolet rays.

In the composition, the lower limit of parts by weight of the isocyanate compound having the alkoxysilyl group relative to 100 parts by weight of the radical generating compound may be 100 parts by weight, 105 parts by weight, 110 parts by weight, 115 parts by weight, 120 parts by weight, 125 parts by weight, 130 parts by weight, 135 parts by weight, 140 parts by weight, 145 parts by weight, or 150 parts by weight or so, and the upper limit thereof may be 300 parts by weight, 280 parts by weight, 260 parts by weight, 240 parts by weight, 220 parts by weight, 200 parts by weight, 180 parts by weight,

or 160 parts by weight or so. The ratio may be less than or equal to, or less than any one of the above-described upper limits, or may be more than or equal to, or more than any one of the above-described lower limits, or may have a range of more than or equal to, or more than any one of the above-described lower limits while being less than or equal to, or less than any one of the above-described upper limits. When the composition forming the intermediate product comprises an isocyanate compound having an alkoxysilyl group within the above range, it is possible to form a compound capable of forming a release layer being advantageous for forming a coating film by exhibiting an excellent cohesion force, having an appropriate level of release peel force and an excellent residual adhesion rate by exhibiting appropriate elasticity and hydrophilicity, and having a minimized change of a release peel force caused by external factors such as heat and ultraviolet rays.

The reaction forming the intermediate product can be performed in the presence of a suitable catalyst, for example, a catalyst known as a urethane catalyst. Such a catalyst may be exemplified by, for example, a tertiary amine compound, an aprotic salt, or an organometallic compound, and the like, and specifically, an organic tin-based catalyst such as dibutyltin dilaurate (DBTDL) may be used, but is not limited thereto.

The lower limit of the content of the catalyst relative to 100 parts by weight of the composition for forming the intermediate product may be 0.001 parts by weight, 0.005 parts by weight, 0.01 parts by weight, 0.015 parts by weight, 0.02 parts by weight, 0.025 parts by weight, 0.03 parts by weight, 0.035 parts by weight, 0.04 parts by weight, 0.045 parts by weight, 0.05 parts by weight, 0.055 parts by weight, 0.06 parts by weight, 0.065 parts by weight, 0.07 parts by weight, 0.075 parts by weight, 0.08 parts by weight, 0.085 parts by weight, 0.09 parts by weight, 0.095 parts by weight, 0.1 parts by weight, 0.12 parts by weight, 0.14 parts by weight, 0.16 parts by weight, 0.18 parts by weight, 0.2 parts by weight, 0.22 parts by weight, or 0.24 parts by weight or so, and the upper limit thereof may be 0.5 parts by weight, 0.49 parts by weight, 0.48 parts by weight, 0.47 parts by weight, 0.46 parts by weight, 0.45 parts by weight, 0.44 parts by weight, 0.43 parts by weight, 0.42 parts by weight, 0.41 parts by weight, 0.4 parts by weight, 0.39 parts by weight, 0.38 parts by weight, 0.37 parts by weight, 0.36 parts by weight, 0.35 parts by weight, 0.34 parts by weight, 0.32 parts by weight, 0.31 parts by weight, 0.3 parts by weight, 0.29 parts by weight, 0.28 parts by weight, 0.27 parts by weight, 0.26 parts by weight, or 0.25 parts by weight or so. The content of the catalyst may be less than or equal to, or less than any one of the above-described upper limits, or may be more than or equal to, or more than any one of the above-described lower limits, or may also be more than or equal to, or more than any one of the above-described lower limits while being less than or equal to, or less than any one of the above-described upper limits.

The intermediate product obtained by reacting the composition may be condensed in the presence of a polyol (diol compound) to prepare a compound represented by the average unit of Formula 1 above.

The polyol means a compound having two or more hydroxy groups in the molecule. In addition, the polyol suffices if it has two or more hydroxy groups in the molecule, its type is not particularly limited, and for example, (poly)ethylene glycol, diethylene glycol, (poly)propylene glycol, 1,2-butylene glycol, 2,3-butylene glycol, 1,3-propanediol, 1,3-butanediol, 1,4-butanediol, 1,6-hexanediol, neopentyl glycol, 1,2-ethylhexyldiol, 1,5-pentanediol, 1,9-nonanediol, 1,10-decanediol, 1,3-cyclohexanedimethanol and 1,4-cyclohexanedimethanol, (poly)ethylenetriol, diethylenetriol, (poly)propylenetriol, glycerin, 1,2,3-butanetriol, 1,2,4-butanetriol, 1,3,4-hexanetriol, 1,3,6-hexanetriol, trimethylolpropane and 2,2-dimethyl-1,3-propanediol, and the like may be used, but is not particularly limited thereto.

The amount of polyol used can also be adjusted considering the structure of the target compound. For example, the lower limit of the weight parts of the polyol relative to 100 parts by weight of the intermediate product may be 0.1 parts by weight, 0.2 parts by weight, 0.3 parts by weight, 0.4 parts by weight, 0.5 parts by weight, 0.6 parts by weight, 0.7 parts by weight, 0.8 parts by weight, or 0.9 parts by weight or so, and the upper limit thereof may be 5 parts by weight, 4.5 parts by weight, 4 parts by weight or less, 3.5 parts by weight, 3 parts by weight, 2.5 parts by weight, 2 parts by weight, 1.5 parts by weight, or 1 part by weight or so. The polyol may be less than or equal to, or less than any one of the above-described upper limits, or may be more than or equal to, or more than any one of the above-described lower limits, or may also be more than or equal to, or more than any one of the above-described lower limits while being less than or equal to, or less than any one of the above-described upper limits.

The method of conducting the condensation reaction is not particularly limited, which may be performed in a known manner.

The present application also relates to a release composition comprising the above compound. The term release composition means a composition capable of forming a release layer, and at this instance, the meaning of the release layer is as known in the industry.

The release composition may be a curable composition, and in this case, the composition may form the release layer before or after curing.

When the release composition is curable, the composition may be an active energy ray (e.g., ultraviolet ray) curing type, a moisture curing type, a heat curing type, or a room temperature curing type, and in some cases, it may be a hybrid form in which two or more of the foregoing are combined. When the release composition is an active energy ray curing type, the curing of the release composition may be performed by irradiation of active energy rays such as ultraviolet rays; when the release composition is a moisture curing type, the curing of the release composition may be performed by a

method of maintaining it under appropriate moisture; in the case of a heat curing type, the curing of the release composition may be performed by a method of applying appropriate heat thereto; or in the case of a room temperature curing type, the curing of the release composition may be performed by a method of maintaining the release composition at room temperature.

The lower limit of the content of the compound having the average unit of Formula 1 above in the release composition may be 0.01 wt%, 0.05 wt%, 0.1 wt%, 0.5 wt%, 1 wt%, 5 wt%, 7 wt%, 9 wt%, 10 wt%, 11 wt%, 13 wt%, or 14 wt% or so, and the upper limit thereof may be 40 wt%, 39 wt%, 38 wt%, 36 wt%, 34 wt%, 32 wt%, 30 wt%, 28 wt%, 26 wt%, 24 wt%, 22 wt%, 20 wt%, 18 wt%, 16 wt%, 14 wt%, 12 wt%, 10 wt%, 8 wt%, 6 wt%, 4 wt%, 2 wt%, or 1 wt% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits. Within the above range, it is possible to provide a release composition capable of securing appropriate film forming ability and release peel force, an excellent residual adhesion rate, and the like. The ratio is a ratio based on solid content, and therefore, when the release composition comprises a solvent, it is a ratio to the total weight of the release composition excluding the weight of the solvent. The ratio may also be the ratio of the compound or its reactant in the release layer to be described below.

The release composition may be a solvent, aqueous, or solventless release composition.

The release composition may comprise the above compound, and may further comprise a curable silicone resin component. In this specification, the term silicone resin component means a component consisting of one polyorganosiloxane, or consisting of a mixture of two or more polyorganosiloxanes.

In one example, the silicone resin component of the release composition may be a so-called addition-curing type component. Such a resin component may comprise, for example, a polyorganosiloxane containing siloxane units having an alkenyl group bonded to a silicon atom (hereinafter may be referred to as a first polyorganosiloxane or a first polyorganosiloxane component).

The first polyorganosiloxane or the first polyorganosiloxane component may have, for example, an average unit of Formula 4 below. Such an average unit may be for the monomolecular polyorganosiloxane, or may also be for the mixture of bimolecular or higher polyorganosiloxanes. When the average unit is for the mixture of bimolecular or higher polyorganosiloxanes, the ratio of other functional groups or atoms is calculated by assuming that the number of moles of all silicon atoms contained in the mixture is 1.

[Formula 4] $P_aQ_bSiO_{(4-a-b)/2}$

In Formula 4, P may be an alkenyl group, Q may be an alkoxy group, a hydroxy group, or a monovalent hydrocarbon group, a may be a number in a range of 0.0001 to 0.1, and b may be a number in a range of 1 to 4.

In Formula 4, the specific types of alkenyl group and alkoxy group are as described at the opening of this specification, and the specific types of monovalent hydrocarbon group are the same as those of the monovalent hydrocarbon group in Formula 1.

The lower limit of a in Formula 4 may be 0.0002, 0.0003, 0.0004, 0.0005, 0.0006, 0.0007, 0.0008, 0.0009, 0.001, 0.002, 0.003, 0.004, 0.005, 0.006, 0.007, 0.008, 0.009, 0.01, 0.012, 0.014, 0.016, 0.018, 0.02, or 0.022 or so, and the upper limit thereof may be 0.09, 0.08, 0.07, 0.06, 0.05, 0.04, 0.03, 0.02, 0.01, 0.009, 0.008, 0.007, 0.006, 0.005, 0.004, or 0.003 or so. The a may be less than or equal to, or less than any one of the above-described upper limits, or may be more than or equal to, or more than any one of the above-described lower limits, or may have a range of more than or equal to, or more than any one of the above-described lower limits while being less than or equal to, or less than any one of the above-described upper limits.

In Formula 4, the lower limit of b may be 1.1, 1.2, 1.3, 1.4, 1.5, 1.6, 1.7, 1.8, or 1.9 or so, and the upper limit of b may be 3.5, 3, 2.9, 2.8, 2.7, 2.6, 2.5, 2.4, 2.2, 2.1, or 2 or so. The b may be less than or equal to, or less than any one of the above-described upper limits, or may be more than or equal to, or more than any one of the above-described lower limits, or may have a range of more than or equal to, or more than any one of the above-described lower limits while being less than or equal to, or less than any one of the above-described upper limits.

The polyorganosiloxane having the average unit of Formula 4 may contain the alkenyl group in a range of 0.01 mol% to 1.5 mol% of all the organic groups. For example, the lower limit of the number of moles of the alkenyl group based on the number of moles of all organic groups of the polyorganosiloxane having the average unit of Formula 4 may be 0.01 mol%, 0.02 mol%, 0.03 mol%, 0.04 mol%, 0.05 mol%, 0.06 mol%, 0.07 mol%, 0.08 mol%, 0.09 mol%, 0.1 mol%, 0.11 mol%, 0.12 mol%, 0.13 mol%, 0.14 mol%, 0.15 mol%, 0.16 mol%, 0.17 mol%, 0.18 mol%, 0.19 mol%, 0.2 mol%, 0.3 mol%, 0.4 mol%, 0.5 mol%, 0.6 mol%, 0.7 mol%, 0.8 mol%, 0.9 mol%, or 1 mol% or so, and the upper limit thereof may be 1.5 mol%, 1.4 mol%, 1.3 mol%, 1.2 mol%, 1.1 mol%, 1 mol%, 0.9 mol%, 0.8 mol%, 0.7 mol. %, 0.6 mol%, 0.5 mol%, 0.4 mol%, 0.3 mol%, 0.2 mol%, 0.1 mol%, 0.19 mol%, or 0.18 mol% or so. The ratio may be less than or equal to, or less than any one of the above-described upper limits, or may be more than or equal to, or more than any one of the above-described lower

limits, or may have a range of more than or equal to, or more than any one of the above-described lower limits while being less than or equal to, or less than any one of the above-described upper limits.

Such a polyorganosiloxane having the average unit of Formula 4 above may contain one or more siloxane units selected from the group consisting of a siloxane unit of Formula 6 below and a siloxane unit of Formula 7 below.

[Formula 6] $ViR^6_2SiO_{1/2}$

[Formula 7] $ViR^6SiO_{2/2}$

In Formulas 6 and 7, Vi is an alkenyl group, and $R^6$ is a hydroxy group, an alkoxy group, or a monovalent hydrocarbon group. Here, the specific types of alkenyl group, alkoxy group, and monovalent hydrocarbon group are as described in Formula 4.

When included, the lower limit of the ratio of the siloxane unit of Formula 6 above based on all siloxane units in the first polyorganosiloxane component may be 0.001 mol%, 0.005 mol%, 0.01 mol%, 0.02 mol%, 0.03 mol%, 0.04 mol%, 0.05 mol%, 0.06 mol%, 0.07 mol%, 0.08 mol%, 0.09 mol%, or 0.095 mol% or so, and the upper limit thereof may be 0.5 mol%, 0.4 mol%, 0.3 mol%, 0.2 mol%, 0.1 mol%, 0.09 mol%, 0.08 mol%, or 0.07 mol% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

When included, the lower limit of the ratio of the siloxane unit of Formula 7 above based on all siloxane units in the first polyorganosiloxane component may be 0.01 mol%, 0.05 mol%, 0.1 mol%, 0.15 mol%, 0.2 mol%, 0.3 mol%, 0.4 mol%, 0.5 mol%, 0.6 mol%, 0.7 mol%, 0.8 mol%, or 0.9 mol% or so, and the upper limit thereof may be 10 mol%, 9 mol%, 8 mol%, 7 mol%, 6 mol%, 5 mol%, 4 mol%, 3 mol%, 2 mol%, or 1 mol% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The first polyorganosiloxane component may contain both siloxane units of Formulas 6 and 7 above. In this case, the lower limit of the molar ratio of the siloxane unit of Formula 7 above to the siloxane unit of Formula 6 above may be 0.1, 0.5, 1, 1.5, 2, 2.5, 3, 4, 5, 6, 7, 8, 9, or 9.5 or so, and the upper limit thereof may be 20, 18, 16, 14, 12, 11, 10, 9, 8, 7, 6, 5, 4, or 3 or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The lower limit of the number of silicon atoms contained in the first polyorganosiloxane component may be 500, 1,500, 2,000, 2,500, or 3,000 or so, and the upper limit thereof may be 10,000, 5,000, 4,000, 3,500, 3,000, 2,500, or 2,100 or so. The number of silicon atoms may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The first polyorganosiloxane component may have a substantially linear structure. In this case, the polyorganosiloxane may be substantially composed of only M units (monofunctional siloxane units) and D units (bifunctional siloxane units), or may contain T units (trifunctional siloxane units) and/or Q units (tetrafunctional siloxane units) together with M units (monofunctional siloxane units) and D units (bifunctional siloxane units), but may have a structure that the ratio of the T units (trifunctional siloxane units) and/or the Q units (tetrafunctional siloxane units) is below a certain level.

For example, in the first polyorganosiloxane component, the upper limit of the ratio of the total number of moles of the T and Q units to the number of moles of all siloxane units contained in the polyorganosiloxane (100 X (number of moles of T unit + number of moles of Q unit)/number of moles of all siloxane units) may be 10 mol%, 9 mol%, 8 mol%, 7 mol%, 6 mol%, 5 mol%, 4 mol%, 3 mol%, 2 mol%, 1 mol%, or 0.5 mol% or so, and the lower limit thereof may be 0 mol%. The ratio may be less than or equal to, or less than any one of the above-described upper limits, or may be within a range of less than or equal to, or less than any one of the above-described upper limits while being more than or equal to, or more than any one of the above-described lower limits.

The lower limit of the weight average molecular weight of the polyorganosiloxane having the average unit of Formula 4 above may be 100,000 g/mol, 125,000 g/mol, 150,000 g/mol, 175,000 g/mol, 200,000 g/mol, 225,000 g/mol, 250,000 g/mol, 275,000 g/mol, or 300,000 g/mol or so, and the upper limit thereof may be 1,000,000 g/mol, 950,000 g/mol, 900,000 g/mol, 850,000 g/mol, 800,000 g/mol, 750,000 g/mol, 700,000 g/mol, 650,000 g/mol, 600,000 g/mol, 550,000 g/mol, 500,000 g/mol, 450,000 g/mol, or 400,000 g/mol or so. The weight average molecular weight may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits. As the polyorganosiloxane having the average unit of Formula 4 above has a weight average molecular weight within the above-described range, an appropriate viscosity can be ensured to exhibit excellent coating properties.

The lower limit of the polydispersity index of the polyorganosiloxane having the average unit of Formula 4 above may be 1, 1.25, or 1.5 or so, and the upper limit thereof may be 5, 3.5, or 2.5 or so. The polydispersity index may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The curable silicone resin component may comprise a polyorganosiloxane having an average unit of Formula 5 below (hereinafter, may be referred to as a second polyorganosiloxane or a second polyorganosiloxane component) together with the polyorganosiloxane having the average unit of Formula 4 as described above. Such an average unit may be for the monomolecular polyorganosiloxane, or may be for the mixture of bimolecular or higher polyorganosiloxanes. When the average unit is for the mixture of bimolecular or higher polyorganosiloxanes, the ratio of other functional groups or atoms is calculated by assuming that the number of moles of all silicon atoms contained in the mixture is 1.

[Formula 5] $H_cQ_dSiO_{(4-c-d)/2}$

In Formula 5, H may be a hydrogen atom, Q may be an alkoxy group, a hydroxy group, or a monovalent hydrocarbon group, c may be a number in a range of 0.01 to 0.9, and d may be a number in a range of 1 to 4. Specific examples of the alkoxy group or monovalent hydrocarbon group of Formula 5 are the same as those of Formula 4.

In Formula 5 above, the lower limit of c above may be 0.05, 0.1, 0.15, 0.2, 0.25, 0.3, 0.31, 0.32, 0.33, 0.34, 0.35, 0.4, 0.5, or 0.6 or so, and the upper limit thereof may be 2, 1.5 1, 0.9, 0.8, 0.7, 0.65, 0.6, 0.5, 0.4, 0.39, 0.38, 0.37, 0.36, or 0.35 or so. The c may be less than or equal to, or less than any one of the above-described upper limits, or may be more than or equal to, or more than any one of the above-described lower limits, or may have a range of more than or equal to, or more than any one of the above-described lower limits while being less than or equal to, or less than any one of the above-described upper limits.

In Formula 5 above, the lower limit of d above may be 0.5, 1, 1.1, 1.2, 1.3, 1.4, 1.5, or 1.6 or so, and the upper limit thereof may be 4, 3.5, 3, 2.5, 2, 1.9, 1.8, 1.7, 1.6, or 1.5. The d may be less than or equal to, or less than any one of the above-described upper limits, or may be more than or equal to, or more than any one of the above-described lower limits, or may have a range of more than or equal to, or more than any one of the above-described lower limits while being less than or equal to, or less than any one of the above-described upper limits.

The lower limit of the ratio of the number of moles of all silicon atom-bonded hydrogen atoms contained in the average unit of Formula 5 above based on the number of moles of all silicon atom-bonded organic groups contained in the average unit of Formula 5 may be 1 mol%, 5 mol%, 10 mol%, 15 mol%, 20 mol%, 25 mol%, or 30 mol% or so, and the upper limit thereof may be 85 mol%, 80 mol%, 75 mol%, 70 mol%, 65 mol%, 60 mol%, 55 mol%, 50 mol%, 45 mol%, 40 mol%, 35 mol%, 30 mol%, 25 mol%, or 20 mol% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits. Under such a ratio, it is possible to secure appropriate curability, and it is possible to form a release layer having desired release characteristics.

The polyorganosiloxane having the average unit of Formula 5 according to one example of the present application may contain a siloxane unit of Formula 9 below.

[Formula 9] $HR^6SiO_{2/2}$

In Formula 9, $R^6$ may be a hydroxy group, an alkoxy group, or a monovalent hydrocarbon group. Specific examples of the alkoxy group or monovalent hydrocarbon group of Formula 9 above are the same as those of Formula 5.

The lower limit of the ratio of the number of moles of the siloxane unit of Formula 9 above based on the total number of moles of siloxane units containing silicon atom-bonded hydrogen atoms among all siloxane units contained in the second polyorganosiloxane component may be 85 mol%, 90 mol%, 95 mol%, 96 mol%, 97 mol%, 98 mol%, 99 mol%, or 99.5 mol% or so, and the upper limit thereof may be 100 mol% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The lower limit of the ratio of the siloxane unit of Formula 9 above based on all siloxane units in the second polyorganosiloxane component may be 10 mol%, 15 mol%, 20 mol%, 25 mol%, 30 mol%, 35 mol%, 40 mol%, 45 mol%, 50 mol%, 55 mol%, or 60 mol% or so, and the upper limit thereof may be 85 mol%, 80 mol%, 75 mol%, 70 mol%, 65 mol%, 60 mol%, 55 mol%, or 50 mol% or so. The ratio may be less than or equal to, or less than any one of the above-described upper

limits, or may be more than or equal to, or more than any one of the above-described lower limits, or may be within a range of less than or equal to, or less than any one of the above-described upper limits while being more than or equal to, or more than any one of the above-described lower limits.

The lower limit of the number of silicon atoms contained in the second polyorganosiloxane component may be 20, 25, 30, 35, 40, 45, 50, 55, 60, 65, 70, 75, 80, 85, or 90 or so, and the upper limit may be 1,000, 950, 900, 850, 800, 750, 700, 650, 600, 550, 500, 450, 400, 350, 300, 250, 200, 150, 100, 95, 90, 85, 80, 75, 70, 65, 60, 55, or 50 or so. The number of silicon atoms may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The second polyorganosiloxane component may have a substantially linear structure. In this case, the polyorganosiloxane may be substantially composed of only M units and D units, or may comprise Tand/or Q units together with M units and D units, but may have a structure that the ratio of the T and/or Q units is below a certain level.

For example, in the second polyorganosiloxane component, the upper limit of the ratio of the total number of moles of the Tand Q units to the number of moles of all siloxane units contained in the polyorganosiloxane (100 X (number of moles of T unit + number of moles of Q unit)/number of moles of all siloxane units) may be 10 mol%, 9 mol%, 8 mol%, 7 mol%, 6 mol%, 5 mol%, 4 mol%, 3 mol%, 2 mol%, 1 mol%, or 0.5 mol% or so, and the lower limit thereof may be 0 mol% or so. The ratio may be less than or equal to, or less than any one of the above-described upper limits, or may be within a range of less than or equal to, or less than any one of the above-described upper limits while being more than or equal to, or more than any one of the above-described lower limits.

The lower limit of the weight average molecular weight of the polyorganosiloxane having the average unit of Formula 5 above may be is 1,000 g/mol, 1,500 g/mol, 2,000 g/mol, 2,500 g/mol, 3,000 g/mol, 3,500 g/mol, 4,000 g/mol, 4,500 g/mol, 5,000 g/mol, 5,500 g/mol, 6,000 g/mol, 6,500 g/mol, 7,000 g/mol, 7,500 g/mol, or 8,000 g/mol or so, and the upper limit thereof may be 100,000 g/mol, 90,000 g/mol, 80,000 g/mol, 70,000 g/mol, 60,000 g/mol, 50,000 g/mol, 45,000 g/mol, 40,000 g/mol, 30,000 g/mol, 20,000 g/mol, 15,000 g/mol, 10,000 g/mol, 50,000 g/mol, 45,000 g/mol, 40,000 g/mol, 35,000 g/mol, 30,000 g/mol, 25,000 g/mol, 20,000 g/mol, 15,000 g/mol, or 12,000 g/mol or so. The weight average molecular weight may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. As the polyorganosiloxane having the average unit of Formula 5 above has a weight average molecular weight within the above-mentioned range, it is possible to secure excellent curability.

In the polyorganosiloxane having the average unit of Formula 5 above, the lower limit of the polydispersity index may be 1, 1.25, or 1.5 or so, and the upper limit thereof may be 5, 3.5, or 2.5 or so. The polydispersity index may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The lower limit of the content of polyorganosiloxane having the average unit of Formula 4 above in the curable silicone resin component or the release composition may be 50 wt%, 52 wt%, 54 wt%, 56 wt%, 58 wt%, 60 wt%, 62 wt%, 64 wt%, 66 wt%, 68 wt%, 70 wt%, 75 wt%, 80 wt%, 85 wt%, or 90 wt% or so, and the upper limit thereof may be 98 wt%, 95 wt%, 94 wt%, 93 wt%, 92 wt%, 90 wt%, 85 wt%, or 80 wt% or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. The ratio is a ratio based on solid content, and therefore, when the release composition comprises a solvent, it is a ratio to the total weight of the release composition excluding the weight of the solvent. By comprising the polyorganosiloxane having the average unit of Formula 4 within the above-described range, it is possible to secure an appropriate level of release peel force and an excellent residual adhesion rate of the release layer to be described below.

The lower limit of parts by weight of the polyorganosiloxane having the average unit of Formula 5 above in the curable silicone resin component or the release composition relative to 100 parts by weight of the polyorganosiloxane having the average unit of Formula 4 above may be 0.1 parts by weight, 0.25 parts by weight, 0.5 parts by weight, 0.75 parts by weight, 1 part by weight, 1.25 parts by weight, 1.5 parts by weight, 1.75 parts by weight, or 2 parts by weight or so, and the upper limit thereof may be 10 parts by weight, 8 parts by weight, 6 parts by weight, 4 parts by weight, or 3 parts by weight or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. When the polyorganosiloxane having the average unit of Formula 5 above is included within the above range, the crosslinking density can be improved to secure a cured product with excellent durability.

The lower limit of the weight parts of the compound having the average unit of Formula 1 above in the release

composition relative to 100 parts by weight of the polyorganosiloxane having the average unit of Formula 4 above may be 0.1 parts by weight, 0.25 parts by weight, 0.5 parts by weight, 0.75 parts by weight, 1 part by weight, 1.25 parts by weight, 1.5 parts by weight, 1.75 parts by weight, 2 parts by weight, 5 parts by weight, 10 parts by weight, 15 parts by weight, or 20 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, 20 parts by weight, 15 parts by weight, 10 parts by weight, or 5 parts by weight or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. By adjusting the ratio of the compound having the average unit of Formula 1 above, the desired release layer can be formed more effectively.

The release composition may comprise the above components and may optionally comprise additional components, if necessary.

For example, the release composition may further comprise a compound of Formula 10 below.

[Formula 10]

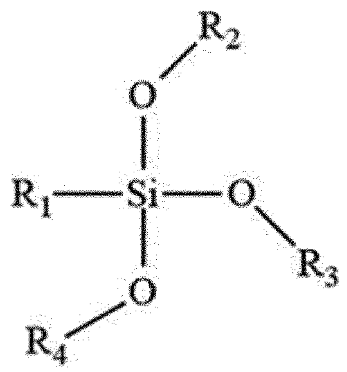

In Formula 10, $R_1$ may be a double bond-containing group, and $R_2$ to $R_4$ may each independently be an alkyl group.

By applying the compound of Formula 10, it is possible to form a release composition having excellent film forming properties, and such a release composition can form a release layer having excellent bonding properties to a base material, having an appropriate level of release peel force and an excellent residual adhesion rate, and a minimized change of a release peel force caused by external factors such as heat and ultraviolet rays.

Specific examples of the alkyl groups of $R_2$ to $R_4$ in Formula 10 are as described at the opening of this specification.

In addition, the specific type of the double bond-containing group in Formula 10 is not particularly limited, and for example, the double bond-containing group may be exemplified by an alkenyl group or a (meth)acryloyloxyalkyl group, and the like. Here, the specific types of the alkenyl group and the alkyl group of the (meth)acryloyloxyalkyl group are as described at the opening of this specification.

When included, the lower limit of the content of the compound of Formula 10 above relative to 100 parts by weight of the compound having the average unit of Formula 1 above may be 0.1 parts by weight, 0.5 parts by weight, 1 part by weight, 5 parts by weight, 10 parts by weight, 15 parts by weight, 20 parts by weight, 35 parts by weight, 40 parts by weight, 50 parts by weight, 100 parts by weight, 150 parts by weight, or 200 parts by weight or so, and the upper limit thereof may be 1000 parts by weight, 800 parts by weight, 600 parts by weight, 400 parts by weight, 200 parts by weight, 150 parts by weight, 100 parts by weight, 90 parts by weight, 80 parts by weight, 70 parts by weight, 60 parts by weight, 50 parts by weight, 40 parts by weight, 30 parts by weight, 20 parts by weight, or 10 parts by weight or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. By adjusting the ratio of compounds as above, the desired release layer can be formed more effectively.

In another example, when included, the lower limit of parts by weight of the compound of Formula 10 above relative to 100 parts by weight of the polyorganosiloxane having the average unit of Formula 4 above may be 0.1 parts by weight, 0.25 parts by weight, 0.5 parts by weight, 0.75 parts by weight, 1 part by weight, 1.25 parts by weight, 1.5 parts by

weight, 1.75 parts by weight, or 2 parts by weight or so, and the upper limit thereof may be 10 parts by weight, 8 parts by weight, 6 parts by weight, 4 parts by weight, or 3 parts by weight or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. By adjusting the ratio of compounds as above, the desired release layer can be formed more effectively.

The release composition of the present application may further comprise a metal catalyst, if necessary, in consideration of curability. The metal catalyst may include one or more selected from the group consisting of aluminum, bismuth, lead, mercury, tin, zinc, platinum, silver, and zirconium as a central metal element. As the metal catalyst, for example, bis[1,3-bis(2-ethenyl)-1,1,3,3-tetramethyldisiloxane]platinum (CAS No. 81032-58-8), dibutyltin dilaurate, or dimethyltin diacetate, and the like may be used, but is not particularly limited thereto. For example, as the catalyst, a catalyst known in the industry as a so-called addition curing type catalyst may be used.

The lower limit of parts by weight of the metal catalyst relative to 100 parts by weight of the polyorganosiloxane having the average unit of Formula 4 above may be 0.1 parts by weight, 0.5 parts by weight, 1 part by weight, 1.5 parts by weight, 2 parts by weight, 2.5 parts by weight, or 3 parts by weight or so, and the upper limit thereof may be 10 parts by weight, 9 parts by weight, 8 parts by weight, 7 parts by weight, 6 parts by weight, 5 parts by weight, or 4 parts by weight or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. By comprising the catalyst within the above-described range, the cured product formation reaction can be effectively promoted while reducing side reactions.

In addition, the release composition according to one example of the present application may further comprise a solvent.

Considering the constitution of the release composition, the solvent may be suitably an organic solvent. The organic solvent is not particularly limited if it is commonly used in the industry, and tetrahydrofuran, methyl ethyl ketone, toluene, and heptane, and the like, or a mixed solvent of the foregoing may be used. In addition, their mixing ratio is not particularly limited, and they may be appropriately formulated as needed.

The amount of the solvent may be adjusted as needed, which is not particularly limited.

The present application also relates to a release layer. The release layer may comprise the above-described release composition or a cured product thereof.

Therefore, the release layer may comprise the compound having the average unit of Formula 1 above or a reactant thereof, and may comprise, if necessary, the curable silicone resin component as described above, a reactant of the curable silicone resin component and/or a compound of Formula 10 or a reactant of the compound of Formula 10 above. Also, the release layer may be formed by curing the above-described release composition according to one example of the present application. The curing may be appropriately performed according to various methods, as described above. In addition, the release layer may comprise components remaining after curing the above-described release composition according to one example of the present application.

The release layer may satisfy at least one of the physical properties described below by comprising the release composition or a cured product thereof.

For example, the release layer may have a peel force change rate AR according to Equation 1 below within a predetermined range. For example, the upper limit of AR may be 30%, 29%, 28%, 27%, 26%, 25%, 24%, 23%, 22%, 21%, 20%, 19%, 18%, 17 %, 16%, 15%, 14%, 13%, or 12% or so, and the lower limit thereof may be 0%, 5%, or 10% or so. The AR may be less than or equal to, or less than any one of the above-described upper limits, or may be within a range of less than or equal to, or less than any one of the above-described upper limits while being more than or equal to, or more than any one of the above-described lower limits.

[Equation 1]

$$AR = 100 \times |A2-A1|/A1$$

In Equation 1, A1 is the release peel force measured at a peel angle of 180 degrees and a peel speed of 0.3 m/min at 25°C after maintaining the release layer in a state of being attached to a pressure-sensitive adhesive layer at 25°C for 24 hours, and A2 is the release peel force measured at a peel angle of 180 degrees and a peel speed of 0.3 m/min at 25°C after performing ultraviolet irradiation and maintenance at 60°C for 24 hours in a state of the relea se layer being attached to a pressure-sensitive adhesive layer.

The release peel force A2 may be the release peel force (A21) measured after first performing the ultraviolet irradiation on the specimen and then maintaining it at 60°C for 24 hours, or may be the release peel force (A22) measured

by performing the ultraviolet irradiation after first maintaining the specimen at 60°C for 24 hours.

In Equation 1, |A2-A1| means the absolute value of the difference between A2 and A1.

The specific measurement method of the peel force change rate AR (measurement method of release peel forces A1 and A2) of Equation 1 is described in the example section.

The release layer may also have a residual adhesion rate Ad according to Equation 2 below within a predetermined range. For example, the lower limit of the residual adhesion rate Ad may be 80%, 81%, 82%, 83%, 84%, 85%, 86%, 87%, 88%, 89%, 90%, or 91% or so, and the upper limit thereof may be 100%, or 95% or so. The Ad may be more than or equal to, or more than any one of the above-described lower limits, or may be within a range of less than or equal to, or less than any one of the above-described upper limits while being more than or equal to, or more than any one of the above-described lower limits. When the release layer according to one example of the present application has a residual adhesion rate (Ad) that satisfies the above range, it can be said to have an excellent (or appropriate) residual adhesion rate.

[Equation 2]

$$Ad = 100 \times Af/Ai$$

In Equation 2, Ai is the release peel force measured while attaching a pressure-sensitive adhesive tape to the release layer and peeling the pressure-sensitive adhesive tape at a peel angle of 180 degrees and a peel rate of 0.3 m/min at 25°C, and Af is the release peel force measured while attaching a pressure-sensitive adhesive tape to the release layer measuring the peel force Ai in the same manner as at the time of measuring the peel force Ai, and peeling the pressure-sensitive adhesive tape at a peel angle of 180 degrees and a peel rate of 0.3 m/min at 25°C.

A specific method of measuring the residual adhesion rate Ad according to Equation 2 above is described in the example section of this specification.

In the release layer according to one example of the present application, the release peel force measured at a peel angle of 180 degrees and a peel rate of 0.3 m/min at room temperature (about 25°C) after attaching it to a pressure-sensitive adhesive tape and maintaining it at room temperature (about 25°C) for 24 hours, may be within a predetermined range. For example, the lower limit of the release peel force may be 5 gf/inch or so, and the upper limit thereof may be 500 gf/inch, 400 gf/inch, 300 gf/inch, 200 gf/inch, 100 gf/inch, 50 gf/inch, or 25 gf/inch or so. The release peel force may be less than or equal to, or less than any one of the above-described upper limits, or may be within a range of less than or equal to, or less than any one of the above-described upper limits while being more than or equal to, or more than any one of the above-described lower limits. When the release layer according to one example of the present application has a release peel force (left at room temperature) that satisfies the above range, it can be said to have an excellent (or appropriate) residual adhesion rate.

Also, in the release layer according to one example of the present application, the release peel force measured at a peel angle of 180 degrees and a peel rate of 0.3 m/min at room temperature (about 25°C) after performing a process of attaching it to a pressure-sensitive adhesive tape and irradiating it with ultraviolet rays with a wavelength of about 150 nm at a light quantity of 3 $J/m^2$ for about 60 seconds, and a process of maintaining it at 60°C for 24 hours may be within a predetermined range. For example, the lower limit of the release peel force may be 5 gf/inch or so, and the upper limit thereof may be 500 gf/inch, 400 gf/inch, 300 gf/inch, 200 gf/inch, 100 gf/inch, 50 gf/inch, or 25 gf/inch or so. The release peel force may be less than or equal to, or less than any one of the above-described upper limits, or may be within a range of less than or equal to, or less than any one of the above-described upper limits while being more than or equal to, or more than any one of the above-described lower limits. When the release layer according to one example of the present application has a release peel force (ultraviolet rays and high temperature leaving) that satisfies the above range, it can be said to have an excellent (or appropriate) residual adhesion rate. In addition, at this instance, the release peel force does not depend on the order of ultraviolet irradiation and high temperature leaving.

The present application also relates to a release film.

The release film may comprise a base film and a release layer attached to one side or both sides of the base film.

The release layer of the release film according to one example of the present application is as described above.

The type of base film of the release film according to one example of the present application is not particularly limited. As the base film, a base film that can generally be applied to form a release film can be applied.

For example, as the base film, a PET (poly(ethylene terephthalate)) film, a PTFE (poly(tetrafluoroethylene)) film, a PP (polypropylene) film, a PE (polyethylene) film, a polyimide film, a polyamide film, a COP (cyclic olefin polymer) film, a polybutene film, a polybutadiene film, a vinyl chloride copolymer film, a polyurethane film, an ethylene-vinyl acetate film, an ethylene-propylene copolymer film, an ethylene-ethyl acrylate copolymer film, an ethylene-methyl acrylate copolymer film and/or a polyimide film, and the like may be used, but is not limited thereto.

In addition, the base film may be composed of a single layer, or may also be laminated with two or more layers, and in some cases, it may further comprise a functional layer such as an antifouling layer or an antistatic layer.

Furthermore, from the viewpoint of base material adhesiveness improvement, surface treatment such as primer treatment may also be further performed on one side or both sides of the base material.

The thickness of the base film is appropriately selected depending on the use, which is not particularly limited, and it may typically be formed to a thickness of 5 μm to 500 μm, 5 μm to 250 μm, or 5 μm to 100 μm.

The release film of the present application may be manufactured in a known manner. In one example, the release film of the present application may be manufactured by applying the release composition according to one example of the present application to one side or both sides of a base material, and then curing it to form a release layer. Here, the application method of the release composition is not particularly limited if it is commonly used in the industry, which includes, for example, knife coating, roll coating, or reverse coating, and the like. Also, the formation of the release layer may be performed after sufficiently removing bubble-causing components such as volatile components or reaction residues of the release composition. In addition, the method of curing the release composition is not particularly limited, and it may be cured through an appropriate aging process, or in an appropriate high temperature environment or light irradiation environment, as described above.

The thickness of the release layer included in the release film is not particularly limited, which may be, for example, 10 nm to 10 μm, 10 nm to 1 μm, or 10 nm to 100 nm.

In addition, the present application relates to a pressure-sensitive adhesive film.

The pressure-sensitive adhesive film according to one example of the present application may comprise the above-described release layer and a pressure-sensitive adhesive layer to which the release layer is attached. By comprising the release layer, it is possible to protect the pressure-sensitive adhesive layer until it is used.

The release layer of the pressure-sensitive adhesive film according to one example of the present application is as described above.

The pressure-sensitive adhesive forming the pressure-sensitive adhesive layer of the pressure-sensitive adhesive film according to one example of the present application is not particularly limited.

For example, as the pressure-sensitive adhesive forming the pressure-sensitive adhesive layer, one using, as a base polymer, an acrylic polymer, a silicone-based polymer, a polyester, a polyurethane, a polyamide, a polyether, or a fluorine-based or rubber-based polymer, and the like can be appropriately selected and used.

## Advantageous Effects

The present application can provide a compound, a release composition, a release layer, a release film, and a pressure-sensitive adhesive film. The present application can provide a compound that can form a release layer which enables to exhibit an appropriate level of release peel force, and has an excellent bonding force with a base film and excellent solvent resistance. In addition, the present application can provide a compound that when the release layer has been formed, the release layer exhibits a stable residual adhesion rate even in the case of being repeatedly applied to a pressure-sensitive adhesive layer, and the like. The present application can also provide a release composition and a release layer comprising the compound, and a release film and a pressure-sensitive adhesive film comprising the release layer.

## Description of Drawings

Figure 1 briefly shows steps of preparing a compound in a manner according to one example of the present application.

## Mode for Invention

Hereinafter, the content of the present application will be described in detail with reference to examples and comparative examples, but the content of the present application is not limited to the following examples.

### 1. Release peel force

A specimen was prepared by laminating a pressure-sensitive adhesive layer of a pressure-sensitive adhesive tape (TESA7475 PV2, TESA) for measuring a release force to the release layer of each release film of Examples or Comparative Examples. The attachment was performed by placing the pressure-sensitive adhesive tape on the release layer and then reciprocating a roller with a load of 2.5 kg three times. The specimen was maintained at room temperature (about 25°C) or 60°C for 24 hours, and then the release peel force was measured using a physical property measuring device (Cheminstruments, AR-1000) while the pressure-sensitive adhesive tape for measuring the release force was peeled at room temperature (about 25°C) at a peel angle of 180 degrees and a peel rate of 0.3 m/min.

### 2. Change rate (AR) of release peel force

The change rate AR of the release peel force of each release layer of Examples or Comparative Examples was confirmed through Equation 1 below.

[Equation 1]

$$AR = 100 \times |A2\text{-}A1| / A1$$

In Equation 1, A1 is the release peel force measured at a peel angle of 180 degrees and a peel rate of 0.3 m/min at room temperature (about 25°C) using a physical property measurement device (Cheminstruments, AR-1000) after maintaining a specimen manufactured by laminating a pressure-sensitive adhesive tape (TESA7475 PV2, TESA) for measuring a release force in the same manner as in the release peel force measurement at room temperature (about 25°C) for 24 hours.

In Equation A, A2 is the release peel force measured at a peel angle of 180 degrees and a peel rate of 0.3 m/min at room temperature (about 25°C) using a physical property measurement device (Cheminstruments, AR-1000) after irradiating a specimen manufactured by laminating a pressure-sensitive adhesive tape (TESA7475 PV2, TESA) for measuring a release force in the same manner as in the release peel force measurement with ultraviolet rays, and maintaining it at 60°C for 24 hours. As the ultraviolet rays, the ultraviolet rays with a wavelength of about 150 nm or so were irradiated at a light quantity of 3 $J/m^2$ for about 60 seconds.

The release peel force A2 may be the release peel force (A21) measured after first performing the ultraviolet irradiation on the specimen and then maintaining it at 60°C for 24 hours, or may be the release peel force (A22) measured by performing the ultraviolet irradiation after first maintaining the specimen at 60°C for 24 hours.

### 3. Residual adhesion rate (Ad)

The residual adhesion rate Ad of the release layer of each release film of Examples or Comparative Examples was confirmed according to Equation 2 below.

[Equation 2]

$$Ad = 100 \times Af/Ai$$

In Equation 2, Ai is the release peel force measured after maintaining the specimen prepared according to the content described in the release peel force evaluation method at room temperature (about 25°C) for 24 hours.

In Equation 2, Af is the release peel force measured after attaching a standard tape (TESA7475, TESA) to the release layer of the release film after measuring the peel force Ai in the same manner as measuring the peel force Ai again to prepare a specimen, and then maintaining the specimen at room temperature (about 25°C) for about 24 hours.

The release peel forces Ai and Af were measured using a physical property measuring device (AR-1000, Cheminstruments) in the same manner as in the release peel force measurement method while the pressure-sensitive adhesive tape (TESA7475) was peeled at room temperature (about 25°C) at a peel angle of 180 degrees and a peel rate of 0.3 m/min.

### 4. Solvent resistance evaluation method

The release layer of each release film of Examples or Comparative Examples was irradiated with ultraviolet rays and maintained at 60°C for 24 hours. The ultraviolet ray irradiation was performed in the same manner as when measuring the release peel force A2 of Equation A above. Subsequently, using No.542-AB equipment (Yasauda), a cloth soaked in toluene was reciprocated until the release layer fell off, and at this time, the number of reciprocating times until just before the release layer fell off was measured to evaluate the solvent resistance according to the solvent resistance evaluation criteria below.

[Solvent resistance evaluation criteria]

PASS: more than 10 times

NG: less than 10 times

**5. Evaluation of weight average molecular weight**

A weight average molecular weight (Mw) and a polydispersity index (PDI) were measured using GPC (gel permeation chromatography). The unit of weight average molecular weight (Mw) and number average molecular weight (Mn) mentioned in this specification is g/mol.

A sample (sample to be analyzed) was placed in a 20 mL vial and diluted with THF (tetrahydrofuran) to a concentration of about 20 mg/mL, and the standard sample for calibration and the sample to be analyzed were filtered through a syringe filter (pore size: 0.2 μm), and then the molecular weight characteristics were measured. As an analysis program, Agilent technologies' ChemStation was used, and the elution time of the sample was compared with the calibration curve to obtain the number average molecular weight (Mn) and weight average molecular weight (Mw), and then the value (Mw/Mn) obtained by dividing the weight average molecular weight (Mw) by the number average molecular weight (Mn) was taken as the polydispersity index.

<GPC measurement conditions>

Instrument: Agilent technologies' 1200 series

Column: using Agilent technologies' TL Mix. A&B

Solvent: THF

Column temperature: 40°C

Sample concentration: 20 mg/mL, 10 μl injection

Using MP: 364000, 91450, 17970, 4910, 1300 as standard sample

**Preparation Example 1.**

The compound was synthesized according to the reaction scheme shown in Figure 1. First, 2-hydroxy-2-methylpropiophenone (S1) and 3-(triethoxysilyl)propyl isocyanate (S2) were mixed in a weight ratio of 16.42:24.7 (S1: S2), and reacted at about 80°C in the presence of a catalyst (DBTDL; dibutyltin dilaurate), whereby the hydroxy group of 2-hydroxy-2methylpropiophenone (S1) and the isocyanate group of 3-(triethoxysilyl)propyl isocyanate (S2) were reacted to produce an intermediate product (A). The catalyst was used in an amount of about 0.292 parts by weight relative to 100 parts by weight of the sum of the 2-hydroxy-2-methylpropiophenone (S1) and the 3-(triethoxysilyl)propyl isocyanate (S2).

Subsequently, the intermediate product (A) and 2,2-dimethyl-1,3-propanediol (B) were mixed in a weight ratio (A: B) of about 100:0.948, and subjected to condensation reaction at about 100°C for about 3 to 5 hours to produce a target compound (compound shown in Figure 1), which was purified in a known manner.

The weight average molecular weight of the target compound was about 50,000 g/mol or so, and the polydispersity index (PDI) was about 2.1851 or so.

Through the above synthesis process, it can be known that the target compound is a compound having an average unit of Formula A below.

[Formula A] $R^1R^2_nSiX_{(3-n)/2}$

In Formula A, $R^1$ is a functional group of Formula B below, $R^2$ is an isocyanatopropyl group, a functional group of Formula C below, or an ethoxy group, X is a linker linking the silicon atoms of the target compound to each other, which is an oxygen atom or a divalent linker of Formula D below, and n is a number in a range of 0 to 2.

[Formula B]

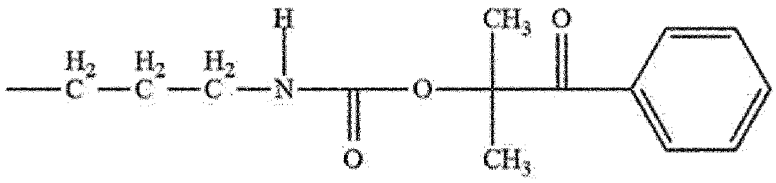

The leftmost carbon atom in Formula B is directly linked to the silicon atom in Formula A.

[Formula C]

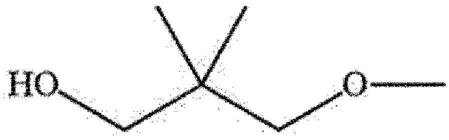

The rightmost oxygen atom in Formula C is directly linked to the silicon atom in Formula A.

[Formula D]

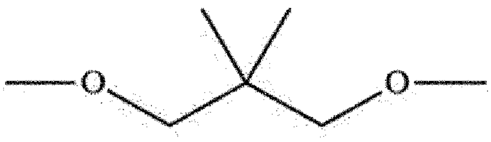

In Formula D, the oxygens on both sides are each directly linked to the silicon atoms in Formula A.

**Example 1.**

A polyorganosiloxane of Formula E below (KS-847H, Shinetsu Silicone) (weight average molecular weight about 350,000 g/mol), a polyorganosiloxane of Formula F below (X-92-122, Shinetsu Silicone) (weight average molecular weight about 10,000 g/mol), a platinum catalyst (PL-50L, Shinetsu Silicone) (C), the compound of Preparation Example 1 above, and an alkoxysilane (G) (3-(trimethoxysilyl)propyl acrylate) were mixed in a weight ratio of 5:0.1:0.25:0.5:0.1 (E: F: C: Preparation Example 1: G), and dispersed in a solvent to prepare a release composition. As the solvent (S), one obtained by mixing THF (tetrahydrofuran), MEK (methylethyl ketone), toluene (T), and n-heptane (H) in a weight ratio of 50:30:10:10 (THF: MEK: T: H) was used.

[Formula E]

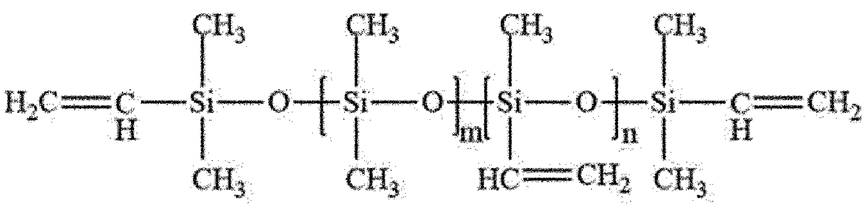

In Formula E, m is a number of about 1,500 or so, and n is a number of about 12 to 13 or so.

[Formula F]

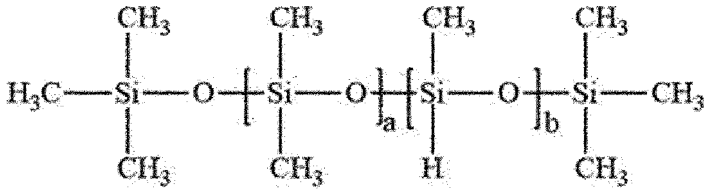

In Formula F, a and b are each a number of about 34 to 36 or so.

**Example 2.**

A polyorganosiloxane of Formula E (KS-847H, Shinetsu Silicone) (weight average molecular weight about 350,000 g/mol), a polyorganosiloxane of Formula F (X-92-122, Shinetsu Silicone) (weight average molecular weight about 10,000 g/mol), a platinum catalyst (PL-50L, Shinetsu Silicone) (C), the compound of Preparation Example 1, and an alkoxysilane of Formula G (Gelest, DMS-R11, 3-(trimethoxysilyl)propyl acrylate) were mixed in a weight ratio of 5:0.1:0.25:0.05:0.1 (E: F: C: Preparation Example 1: G), and dispersed in a solvent to prepare a release composition. As the solvent, the same solvent as in Example 1 was used.

**Example 3.**

A polyorganosiloxane of Formula E (KS-847H, Shinetsu Silicone) (weight average molecular weight about 350,000 g/mol), a polyorganosiloxane of Formula F (X-92-122, Shinetsu Silicone) (weight average molecular weight about 10,000 g/mol), a platinum catalyst (PL-50L, Shinetsu Silicone) (C), the compound of Preparation Example 1, and an alkoxysilane of Formula G (Gelest, DMS-R11, 3-(trimethoxysilyl)propyl acrylate) were mixed in a weight ratio of 5:0.1:0.25:0.25:0.1 (E: F: C: Preparation Example 1: G), and dispersed in a solvent to prepare a release composition. As the solvent, the same solvent as in Example 1 was used.

**Example 4.**

A polyorganosiloxane of Formula E (KS-847H, Shinetsu Silicone) (weight average molecular weight about 350,000 g/mol), a polyorganosiloxane of Formula F (X-92-122, Shinetsu Silicone) (weight average molecular weight about 10,000 g/mol), a platinum catalyst (PL-50L, Shinetsu Silicone) (C), the compound of Preparation Example 1, and an alkoxysilane of Formula G (Gelest, DMS-R11, 3-(trimethoxysilyl)propyl acrylate) were mixed in a weight ratio of 5:0.1:0.25:1:0.1 (E: F: C: Preparation Example 1: G), and dispersed in a solvent to prepare a release composition. As the solvent, the same solvent as in Example 1 was used.

**Comparative Example 1.**

A polyorganosiloxane of Formula E (KS-847H, Shinetsu Silicone) (weight average molecular weight about 350,000 g/mol), a polyorganosiloxane of Formula F (X-92-122, Shinetsu Silicone) (weight average molecular weight about 10,000 g/mol), and a platinum catalyst (PL-50L, Shinetsu Silicone) (C) were mixed in a weight ratio of 5:0.1:0.25 (E: F: C), and dispersed in a solvent to prepare a release composition. As the solvent, the same solvent as in Example 1 was used.

Physical property evaluation

The release compositions of Examples or Comparative Examples were each applied to a base film, and maintained at a temperature of about 150°C for about 3 minutes to form a release layer on the base film. The thickness of the release layer was about 50 nm to 80 nm or so. As the base film, a PET (polyethylene terephthalate) film with a thickness of about 50 μm or so was used.

The results of the test data measured in Examples and Comparative Example above were summarized in Table 1 below.

[Table 1]

| | A1 | A21 | AR1 | A22 | AR2 | Ad | Solvent resistance | Number of times |
|---|---|---|---|---|---|---|---|---|
| Example 1 | 15.7 | 17.6 | 12.1 | 16.3 | 3.82 | 97.6 | PASS | 10~20 |
| Example 2 | 16.1 | 17.4 | 8.07 | 15.7 | 2.48 | 98.7 | PASS | 20~30 |
| Example 3 | 15.4 | 16.7 | 8.44 | 16.9 | 9.74 | 98.5 | PASS | 30~50 |
| Example 4 | 18.3 | 19.9 | 8.74 | 19.1 | 4.37 | 92.1 | PASS | ≥50 |
| Comparative Example 1 | 15.9 | 19.4 | 22.0 | 15.5 | 2.52 | 97.9 | NG | 10 |

In Table 1, A1 is the peel force A1 in Equation A of the release peel force change rate evaluation, where the unit is gf/inch, and A21 is the peel force A21 mentioned in the release peel force change rate (AR) evaluation method, which is the release peel force measured after first performing the ultraviolet irradiation on the specimen and then maintaining it at 60°C for 24 hours, where the unit is gf/inch.

Also, in Table 1, AR1 is a value obtained by substituting the above A21 as A2 in Equation A of the release peel force change rate (AR) evaluation method, where the unit is %.

In Table 1, A22 is the peel force A22 mentioned in the release peel force change rate (AR) evaluation method, which is the release peel force measured after maintaining the specimen at 60°C for 24 hours and irradiating it with ultraviolet rays, where the unit is gf/inch.

In Table 1, AR2 is a value obtained by substituting the above A22 as A2 in the release peel force change rate (AR) evaluation method, where the unit is %.

In Table 1, Ad is the value calculated as Equation 2 in the residual adhesion rate Ad measurement method section, where the unit is %.

The solvent resistance in Table 1 is the results measured according to the solvent resistance evaluation method, and the number of times is the number of reciprocating times of the cloth soaked in toluene just before the release layer falls off upon the solvent resistance evaluation.

## Claims

**1.** A compound expressed in an average unit of Formula 1 below:

[Formula 1] $R^1_mR^2_nSiX_{(4-m-n)/2}$

wherein, $R^1$ is a radical generating functional group, $R^2$ is hydrogen, an isocyanatoalkyl group, a hydroxyalkyloxy group, an alkoxy group, or a monovalent hydrocarbon group, X is a linker linking silicon atoms of the compound to each other, which is an oxygen atom or a divalent linker of Formula 2 below, m is a number in a range of 1 to 3, n is a number in a range of 0 to 2, and m+n is a number in a range of 1 to 3:

[Formula 2]

$$-O-L_1-O-$$

wherein, $L_1$ is an alkylene group or an alkylidene group, and the oxygen atoms on both sides of $L_1$ are directly linked to the silicon atoms of the compound, respectively.

**2.** The compound according to claim 1, wherein $R^1$ is represented by Formula 3 below:

[Formula 3]

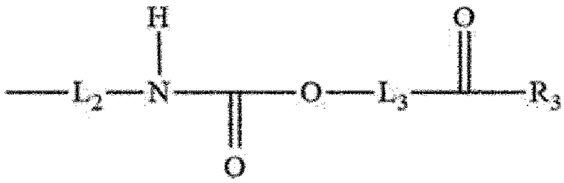

wherein, $L_2$ and $L_3$ are each independently an alkylene group or an alkylidene group, $R_3$ is an aryl group or a heteroaryl group, and $L_2$ in Formula 3 is directly linked to the silicon atom of the compound.

3. The compound according to claim 1, wherein in Formula 1, m is 1, and n is a number in the range of 0 to 2.

4. The compound according to claim 1, having a branched structure, a cage structure, or a partial cage structure.

5. The compound according to claim 1, wherein the weight average molecular weight is in a range of 5,000 g/mol to 200,000 g/mol.

6. The compound according to claim 1, wherein the polydispersity index is in a range of 1 to 10.

7. A release composition comprising the compound of any one of claims 1 to 6.

8. The release composition according to claim 7, further comprising a curable silicone resin component.

9. The release composition according to claim 8, wherein the curable silicone resin component comprises a polyorganosiloxane having an average unit of Formula 4 below and a polyorganosiloxane having an average unit of Formula 5 below:

[Formula 4] $P_aQ_bSiO_{(4-a-b)/2}$

wherein, P is an alkenyl group, Q is an alkoxy group, a hydroxy group, or a monovalent hydrocarbon group, a is a number in a range of 0.0001 to 0.1, and b is a number in a range of 1 to 4:

[Formula 5] $H_cQ_dSiO_{(4-c-d)/2}$

wherein, Q is an alkoxy group, a hydroxy group, or a monovalent hydrocarbon group, c is a number in a range of 0.01 to 0.9, and d is a number in a range of 1 to 4.

10. The release composition according to claim 9, wherein the polyorganosiloxane of Formula 4 comprises one or more siloxane units selected from the group consisting of a siloxane unit of Formula 6 below and a siloxane unit of Formula 7 below:

[Formula 6] $ViR^6{}_2SiO_{1/2}$

[Formula 7] $ViR^6SiO_{2/2}$

wherein, Vi is an alkenyl group, and $R^6$ is a hydroxy group, an alkoxy group, or a monovalent hydrocarbon group.

11. The release composition according to claim 9, wherein the polyorganosiloxane of Formula 5 comprises a siloxane unit of Formula 9 below:

[Formula 9] $HR^6SiO_{2/2}$

wherein, $R^6$ is a hydroxy group, an alkoxy group, or a monovalent hydrocarbon group.

12. The release composition according to claim 9, wherein the polyorganosiloxane having the average unit of Formula 4

has a weight average molecular weight in a range of 100,000 g/mol to 1,000,000 g/mol.

**13.** The release composition according to claim 9, wherein the polyorganosiloxane having the average unit of Formula 5 has a weight average molecular weight in a range of 1,000 g/mol to 50,000 g/mol.

**14.** The release composition according to claim 8, further comprising a compound of Formula 10 below:

[Formula 10]

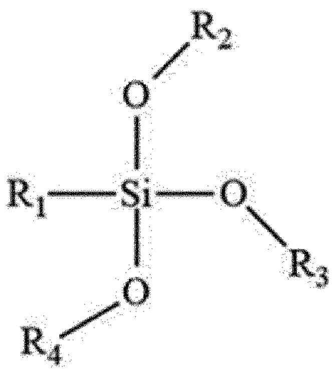

wherein, $R_1$ is a double bond-containing group, and $R_2$ to $R_4$ are each independently an alkyl group.

**15.** A release layer comprising the release composition of claim 7 or a cured product thereof.

**16.** The release layer according to claim 15, wherein the peel force change rate AR according to Equation 1 below is 30% or less:

[Equation 1]

$$AR = 100\times |A2-A1|/A1$$

wherein, A1 is the release peel force measured at a peel angle of 180 degrees and a peel speed of 0.3 m/min at 25°C after maintaining the release layer in a state of being attached to a pressure-sensitive adhesive layer at 25°C for 24 hours, and A2 is the release peel force measured at a peel angle of 180 degrees and a peel speed of 0.3 m/min at 25°C after performing ultraviolet irradiation and maintenance at 60°C for 24 hours in a state of the release layer being attached to a pressure-sensitive adhesive layer.

**17.** The release layer according to claim 15, wherein the residual adhesion rate Ad according to Equation 2 below is 80% or more:

[Equation 2]

$$Ad = 100\times Af/Ai$$

wherein, Ai is the release peel force measured while attaching a pressure-sensitive adhesive tape to the release layer and peeling the pressure-sensitive adhesive tape at a peel angle of 180 degrees and a peel rate of 0.3 m/min at 25°C, and Af is the release peel force measured while attaching a pressure-sensitive adhesive tape to the release layer measuring the peel force Ai in the same manner as at the time of measuring the peel force Ai, and peeling the pressure-sensitive adhesive tape at a peel angle of 180 degrees and a peel rate of 0.3 m/min at 25°C.

**18.** A release film comprising a base film, and the release layer of claim 15 attached to one side or both sides of the base film.

**19.** A pressure-sensitive adhesive film comprising the release layer of claim 15; and a pressure-sensitive adhesive layer

attached to the release layer.

[Figure 1]

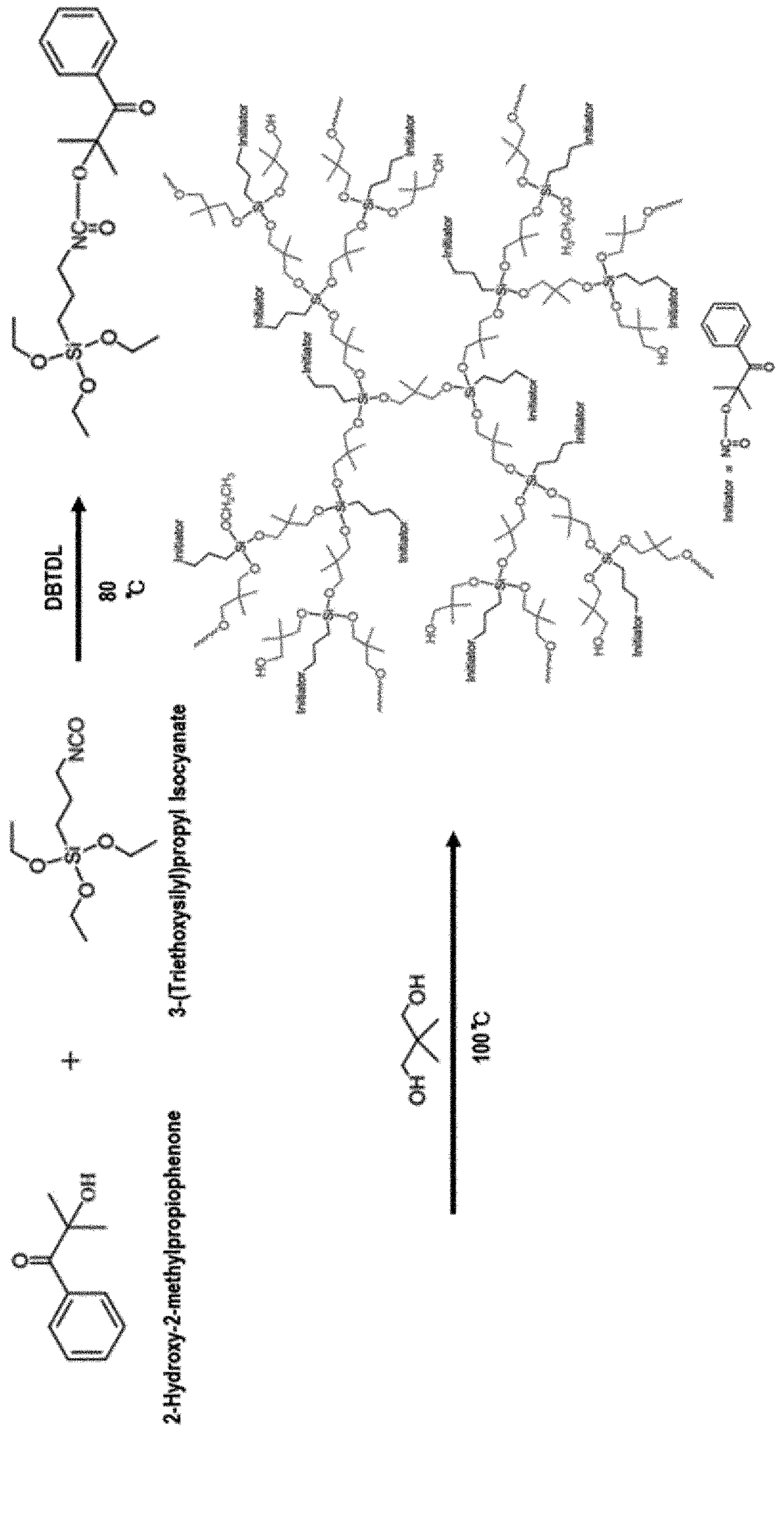
2-Hydroxy-2-methylpropiophenone
3-(Triethoxysilyl)propyl Isocyanate
DBTDL
80 ℃
100℃

**INTERNATIONAL SEARCH REPORT**

International application No. **PCT/KR2023/003108**

**A. CLASSIFICATION OF SUBJECT MATTER**

**C09D 183/06**(2006.01)i; **C09D 5/20**(2006.01)i; **C09J 7/40**(2018.01)i; **C08G 77/20**(2006.01)i; **C08G 77/12**(2006.01)i; **C08L 83/06**(2006.01)i; **C08K 5/5419**(2006.01)i

According to International Patent Classification (IPC) or to both national classification and IPC

**B. FIELDS SEARCHED**

Minimum documentation searched (classification system followed by classification symbols)

C09D 183/06(2006.01); C08F 2/50(2006.01); C08G 77/44(2006.01); C08J 7/04(2006.01); C08K 9/04(2006.01); C08K 9/06(2006.01); C09D 175/14(2006.01); F21K 99/00(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 이형 필름(release layer), 실리콘계 화합물(silicone compound), 이소시아네이트(isocyanate), 히드록시(hydroxy), 우레탄 반응(urethane reaction)

**C. DOCUMENTS CONSIDERED TO BE RELEVANT**

| Category* | Citation of document, with indication, where appropriate, of the relevant passages | Relevant to claim No. |
|---|---|---|
| X<br>A | CN 114133572 A (JIANGNAN UNIVERSITY) 04 March 2022 (2022-03-04)<br>See abstract; claim 1; and paragraphs [0062], [0063], [0068] and [0069]. | 1-4<br>5-19 |
| X | CN 110452417 A (GUANGDONG UNIVERSITY OF TECHNOLOGY) 15 November 2019 (2019-11-15)<br>See paragraphs [0058]-[0066]. | 1-3 |
| A | KR 10-2020-0041683 A (LG CHEM, LTD.) 22 April 2020 (2020-04-22)<br>See entire document. | 1-19 |
| A | WO 2009-050116 A2 (CIBA HOLDING INC.) 23 April 2009 (2009-04-23)<br>See entire document. | 1-19 |
| A | KR 10-2017-0079551 A (LG CHEM, LTD.) 10 July 2017 (2017-07-10)<br>See entire document. | 1-19 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 June 2023** | **20 June 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/003108**

| Patent document cited in search report | | | Publication date (day/month/year) | Patent family member(s) | | | Publication date (day/month/year) |
|---|---|---|---|---|---|---|---|
| CN | 114133572 | A | 04 March 2022 | CN | 114133572 | B | 16 September 2022 |
| CN | 110452417 | A | 15 November 2019 | CN | 110452417 | B | 22 February 2022 |
| KR | 10-2020-0041683 | A | 22 April 2020 | KR | 10-2326676 | B1 | 15 November 2021 |
| WO | 2009-050116 | A2 | 23 April 2009 | US | 2009-0104464 | A1 | 23 April 2009 |
| | | | | US | 8367743 | B2 | 05 February 2013 |
| | | | | WO | 2009-050116 | A3 | 02 July 2009 |
| KR | 10-2017-0079551 | A | 10 July 2017 | KR | 10-1880211 | B1 | 20 July 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220028888
- KR 1020210115256

### Non-patent literature cited in the description

- *CHEMICAL ABSTRACTS*, 81032-58-8